# EUROPÄISCHE PATENTANMELDUNG

(11) **EP 0 873 889 A1**
(43) Veröffentlichungstag der Anmeldung: **28.10.1998**
(21) Anmeldenummer: 98105725.0
(22) Anmeldetag: 30.03.1998
(51) Int. Cl.: B60D 1/00, B60D 1/06

(54) **Anhängevorrichtung**

(30) Priorität: 24.04.1997 DE 19717274
(71) Anmelder: Volkswagen Aktiengesellschaft, 38436 Wolfsburg (DE)
(72) Erfinder: Behr, Peter, 38518 Gifhorn (DE); Freese, Udo, 38448 Wolfsburg (DE)

(57) **Zusammenfassung**

Kraftfahrzeuge mit Anhängevorrichtung werden mit einem Hinweis ausgestattet, der den Fahrer des Kraftfahrzeuges an die maximale Stützlast der Anhängevorrichtung erinnern soll. Solche Hinweisschilder werden meist in die Scheibe des Kraftfahrzeuges geklebt. Neben dem Aufwand des paßgenauen Einsetzen des Schildes besteht hier auch das Problem, daß diese Schilder mit der Zeit beschädigt oder entfernt werden können.

Bei einem Anbringen des Hinweises in das Material des Kugelhalses besteht diese Gefahr nicht. Der Kugelhals (105) ist abnehmbar, so daß bei abgenommenem Kugelhals der dann hinfällig gewordene Hinweis zur Stützlast sich nicht mehr am Kraftfahrzeug befindet. Der Stützlasthinweis (113) ist vorteilhaft zusammen mit weiteren Informationen (114) in das Material des Kugelhalses (105) eingegossen oder eingeprägt.

## Beschreibung

Die Erfindung betrifft eine Anhängevorrichtung gemäß dem Oberbegriff des Anspruchs 1.

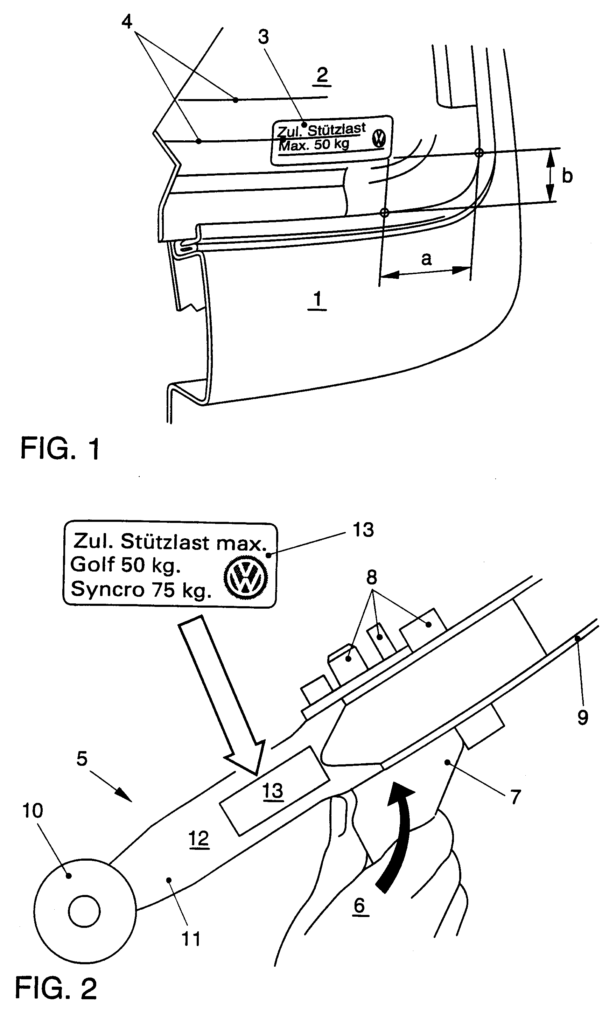

Anhängevorrichtungen an Kraftfahrzeugen, insbesondere Personenkraftfahrzeugen, benötigen am Kraftfahrzeug einen Hinweis auf die zulässige maximale Stützlast der Anhängevorrichtung. Dieser Hinweis wird gewöhnlich, vergleiche Figur 1, in die Heckscheibe des Kraftfahrzeuges geklebt; auch eine Anbringung an der Karosserie oder der Stoßstange ist möglich.

Derart angebrachte Stützlasthinweise sind nicht nur verhältnismäßig aufwendig in der Produktion, sondern sie sind auch nicht dauerhaft, so daß - je nach Benutzung des Kraftfahrzeuges - nach einigen Jahren ein Austausch notwendig werden kann. Eine dauerhafte Anbringung ist am Kraftfahrzeug, beispielsweise durch Farbe oder einen Ätzvorgang zwar möglich, bedingt jedoch verhältnismäßig hohe logistische bzw. Produktionsaufwendungen.

Aufgabe der vorliegenden Erfindung ist es, den Stützlasthinweis preiswert und dauerhaft anzubringen.

Diese Aufgabe wird bei der vorliegenden Erfindung gelöst mit den Merkmalen des Anspruchs 1.

Die Unteransprüche beschreiben besonders bevorzugte Ausführungsformen.

Erfindungsgemäß ist nicht mehr das Kraftfahrzeug selbst mit dem Stützlasthinweis versehen, sondern die Anhängevorrichtung. Hierbei wird der Stützlasthinweis nicht irgendwo in der Anhängevorrichtung angebracht, sondern an gut sichtbaren Teilen derselben, als da sind die Anhängeraufnahme bzw., besonders vorteilhaft, der Hals, der die Anhängeraufnahme (den Kugelkopf) mit dem Kraftfahrzeug, insbesondere Pkw verbindet. Besonders vorteilhaft ist der Stützlasthinweis derart angeordnet, daß er stets sichtbar ist.

Wichtig ist, daß der Stützlasthinweis scheuerungsfest an dem Material des Halses oder der Kugel angebracht ist, d. h., daß nicht ein gewöhnliches Klebetikett verwendet wird, das durch ein um den Hals gelegtes Fangseil eines Anhängers abgescheuert werden könnte. In besonders vorteilhaften Ausführungen wird der Stützlasthinweis in das Material geprägt oder insbesondere eingegossen, da hierdurch ein Erhalt des Hinweises auf Lebensdauer des Bauteils gewährleistet ist. Dieses Einprägen oder Eingießen kann zusammen mit dem Anbringen weiterer Informationen erfolgen, beispielsweise mit einer Teilenummer, dem Herstelldatum, dem Fabrikant, dem System und/oder dem Kraftfahrzeugtyp. Durch das Verbinden des Stützlasthinweises mit diesen ohnehin anzubringenden Informationen läßt sich der Stützlasthinweis nahezu kostenfrei realisieren.

Erfindungsgemäß ist das Material, an dem der Hinweis angebracht wird (bzw. das des Halses bzw. der Kugel) vorteilhaft ein Guß (Gußeisen); aber auch der Einsatz eines Rohres ist möglich. Bei dem Material kann es sich auch um ein geschmiedetes Metall handeln.

Besonders vorteilhaft kommt die Erfindung bei einer abnehmbaren Anhängevorrichtung zum Einsatz, d. h. der Hals ist zusammen mit der Kugel (Kugelhals) von dem Kraftfahrzeug mit einfachen Mitteln, insbesondere von Hand, lösbar. Bei derart ausgebildeten Kraftfahrzeugen wird mit der vorliegenden Erfindung erreicht, daß mit der Abnahme des Halses auch der Stützlasthinweis am Kraftfahrzeug verschwindet, so daß der bei abgenommener Anhängevorrichtung nicht erforderliche Hinweis dann nicht mehr am Fahrzeug sichtbar ist.

Mit der Erfindung wird außerdem erreicht, daß der Stützlasthinweis jedes mal beim Einsatz der Anhängevorrichtung, d. h. beim Ansetzen eines Anhängers, augenfällig vorliegt und somit nicht so leicht in Vergessenheit geraten kann. Hierzu wird der Stützlasthinweis vorteilhaft in einen oberen, ggf. auch seitlichen Bereich des Halses bzw. der Kugel gesetzt, vorzugsweise an den Hals, damit der Stützlasthinweis auch nach dem Ansetzen des Anhängers auf die Kugel sichtbar bleibt.

Für eine besonders gute Optik, d. h. auch Erkennbarkeit, ist der Stützlasthinweis vorteilhaft in einen Bereich der Kugel oder des Halses angesetzt, der zuvor, insbesondere spanabhebend, bearbeitet wurde.

Die Erfindung wird im folgenden anhand von Ausführungsbeispielen und Figuren näher beschrieben.

Es zeigen:
- Figur 1: den Stützlasthinweis gemäß dem Stand der Technik;
- Figur 2: eine erste abnehmbare Anhängevorrichtung mit Stützlasthinweis; und
- Figur 3: eine zweite abnehmbare Anhängevorrichtung mit Stützlasthinweis.

In Figur 1 ist ein Ausschnitt einer Heckklappe 1 eines VW-Golf-Variants dargestellt. In der Heckklappe 1 sitzt eine Scheibe 2, in deren unteren, in Fahrtrichtung gesehenen rechten Ecke innen ein Klebeetikett 3 angebracht ist. Das Klebeetikett 3 trägt die Aufschrift 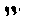 zul. Stützlast max. 50 kg und ein VW-Logo". Die Anbringung des Klebeetiketts 3 ist erschwert durch eine genaue Einbaulage, gekennzeichnet durch die Abstände a von der Seitenkante des Fensters und b von der Unterkante des Fensters. Im vorliegenden Fall beträgt a ca. 60 mm und b ca. 40 mm. Hinzu kommt, daß das Klebeetikett 3 bei dieser Anbringung teilweise auf den Antennenfäden 4 liegt. Ebenso können (nicht dargestellte) Heizfäden in der Heckscheibe störend für die Anbringung des Klebeetiketts 3 sein.

In Figur 2 ist eine abnehmbare Anhängevorrichtung 5 dargestellt, die von Hand 6 (schwarzer Pfeil) über Bedienelemente 7 und Befestigungsmittel 8 in einer Aufnahme 9, die hinter einer (nicht dargestellten) Stoßstange fest mit der Karosserie eines Kraftfahrzeuges verbunden ist, wieder lösbar arretiert werden kann. Die abnehmbare Anhängevorrichtung 5 ist ein Gußteil mit einer Kugel 10, die von einem Hals 11 getragen wird. Die vollständige Einheit wird auch als Kugelhals bezeichnet. Auf dem Hals, in einem spanabhebend nachbearbeiteten Bereich 12 ist, in Einbaulage nach oben gerichtet ein Hinweisschild 13 eingeprägt. Die genaue Anordnung ist durch den weißen Pfeil gekennzeichnet. Da der Kugelhals 5 bei unterschiedlichen Fahrzeugtypen zum Einsatz kommen kann, ist in der Prägung 13 auf mehrere Ausführungen mit unterschiedlichen maximal zulässigen Stützlasten bezuggenommen. Zur Erfüllung desselben Zwecks waren bisher mehrere Schildervarianten notwendig, die beim Einkleben verwechselt werden konnten. Der jeweils eingesetzte Kraftfahrzeugtyp ist in der Regel dem Fahrer bekannt bzw. kann vom Fahrer gewünschtenfalls den Papieren des Kraftfahrzeuges entnommen werden.

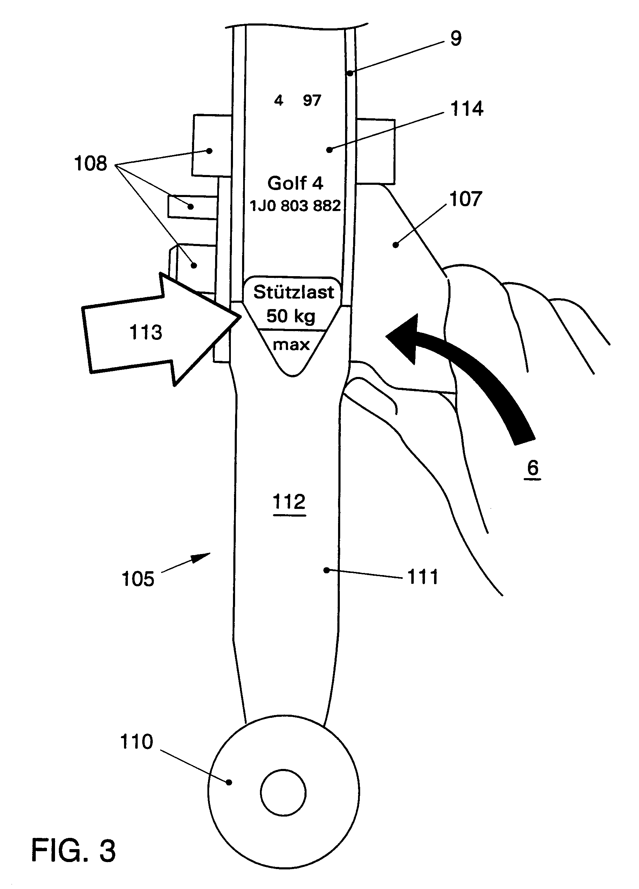

In Figur 3 ist ein Kugelhals 105 dargestellt, der im Aufbau dem Kugelhals 5 entspricht. Auch hier handelt es sich um ein von Hand montierbares und abnehmbares Teil. Im Unterschied zu der in Figur 2 beschriebenen Ausführungsform wird hier der Stützlasthinweis 113 in den Rohling eingegossen, zusammen mit weiteren Hinweisen 114, die den Produktionsmonat, den Fahrzeugtyp und eine Teilenummer beinhalten. Dieser Bereich 113/114 wird, wenn überhaupt, nur noch wenig spanabhebend (z. B. gedreht, geschliffen, gesandet etc.) nachbearbeitet im Vergleich zu dem Bereich 112 und der Kugel 110.

Mit der Erfindung wird der Aufwand des Einklebens eines Hinweisschildes mit all seinen Nachteilen (z. B. Verwechslungsgefahr) an einem Kraftfahrzeug (insbesondere Pkw) vermieden, wobei das maximale Stützgewicht in der Anhängevorrichtung mit sehr geringen Kosten stets zur Verfügung steht. Die Erfindung ermöglicht den Entfall eines Teiles (Schildes) und dessen Varianten unter Beibehaltung der Grundfunktion.

## Patentansprüche

1. Anhängevorrichtung mit einer Anhängeraufnahme (10, 110), die von einem Hals (11, 111) gehalten ist, der mit einem Kraftfahrzeug verbindbar bzw. verbunden ist, dadurch gekennzeichnet, daß eine zulässige Stützlast der Anhängevorrichtung am Material des Halses (11, 111) und/oder der Anhängeraufnahme (10, 110) scheuerfest angebracht ist.

2. Anhängevorrichtung nach Anspruch 1, dadurch gekennzeichnet, daß die maximal zulässige Stützlast durch das Material selbst wiedergegeben, insbesondere eingeprägt (13) oder eingegossen (113) ist.

3. Anhängevorrichtung nach Anspruch 1 oder 2, dadurch gekennzeichnet, daß das Material des Halses und/oder der Anhängeraufnahme gegossen, geschmiedet oder ein Rohr ist.

4. Anhängevorrichtung nach einem der vorhergehenden Ansprüche, dadurch gekennzeichnet, daß der Hals (11, 111), insbesondere von Hand (6), an das Kraftfahrzeug ansetzbar bzw. abnehmbar ist.

5. Anhängevorrichtung nach Anspruch 4, dadurch gekennzeichnet, daß der Stützlasthinweis (13, 113), auch bei in eine Aufnahme (9) am Kraftfahrzeug eingesetzter Anhängevorrichtung (5, 105) sichtbar ist.

6. Anhängevorrichtung nach einem der vorhergehenden Ansprüche, dadurch gekennzeichnet, daß am zugehörigen Kraftfahrzeug kein die zulässige Stützlast wiedergebendes Schild (3) angeordnet ist.

7. Anhängevorrichtung nach einem der vorhergehenden Ansprüche, dadurch gekennzeichnet, daß die Stützlastinformation (113) mit weiteren Informationen (114) am Kugelhals (105) angeordnet, insbesondere in das Material des Kugelhalses (105) hineingeschrieben ist.

8. Anhängevorrichtung nach einem der vorhergehenden Ansprüche, dadurch gekennzeichnet, daß der Stützlasthinweis (13) an einem spanabhebend bearbeiteten Teil (12) des Kugelhalses (5) angeordnet, insbesondere in das Material des Kugelhalses hineingeschrieben ist.

9. Anhängevorrichtung nach einem der vorhergehenden Ansprüche, dadurch gekennzeichnet, daß für unterschiedliche Kraftfahrzeuge unterschiedliche Stützlasten (13) an dem Kugelhals (5) angeordnet sind.
